Europäisches Patentamt

European Patent Office

Office européen des brevets

(19)

(11) EP 0 346 766 B1

(12) EUROPÄISCHE PATENTSCHRIFT

(45) Veröffentlichungstag und Bekanntmachung des Hinweises auf die Patenterteilung:
**11.02.1998 Patentblatt 1998/07**

(51) Int Cl.$^6$: **H04N 7/30**, H04N 7/32

(21) Anmeldenummer: **89110406.9**

(22) Anmeldetag: **08.06.1989**

(54) **Verfahren zur Reduktion von "Blocking"-Artefakten bei Videoszenen-Codierung mittels Diskreter Cosinus Transformation (DCT) bei niedriger Datenrate**

Blocking artifacts reduction method for video scene coding by means of discrete cosine transformation with a low data rate

Procédé pour la réduction d'artefacts résultant de la formation de blocs dans le codage de scène de vidéo par transformation en cosinus discrète avec débit de données réduit

(84) Benannte Vertragsstaaten:
**AT BE CH DE FR GB IT LI LU NL SE**

(30) Priorität: **14.06.1988 DE 3820266**

(43) Veröffentlichungstag der Anmeldung:
**20.12.1989 Patentblatt 1989/51**

(73) Patentinhaber: **SIEMENS AKTIENGESELLSCHAFT**
**80333 München (DE)**

(72) Erfinder: **Jass, Wieland, Dr.**
**D-8011 Baldham (DE)**

(56) Entgegenhaltungen:
**EP-A- 0 201 679**      **EP-A- 0 231 020**
**DE-A- 3 613 343**      **US-A- 4 633 296**

- **OPTICAL ENGINEERING, Januar/Februar 1984, Band 23, Nr. 1, Redondo Beach HOWARD C. REEVE/JAE S. LIM "Reduction of blocking effects in image coding" Seiten 034- 037**

## Beschreibung

Die vorliegende Erfindung betrifft ein Verfahren zur Reduktion sog. Blocking-Artefakte mittels der "Diskreten Cosinus-Transformation (DCT) bei niedriger Datenrate.

Bei einem bestimmten Typ von Videoszenen-Codern wird im Codiervorgang die DCT (Diskrete Cosinus Transformation) angewendet. Der Bildbereich ist in aneinandergrenzende, nichtüberlappende Teilbereiche, nämlich "Blöcke", eingeteilt, in denen jeweils die DCT angewendet wird. Bei Codern für eine niedrige Datenrate, z.B. 64 kbit/s, werden verschiedene Methoden angewendet, um die Rate im Verlauf der Codierung zu beschränken. Es ist u.a. eine typische Vorgehensweise, die Anzahl der Koeffizienten im DCT-Transformationsbereich für die einzelnen Blöcke zu begrenzen, d.h. eine "Frequenzbegrenzung" durchzuführen. Als Folge dieser Frequenzbegrenzungen können in den Bildern sog. Blocking-Artefakte auftreten. Dabei wird die Blockstruktur in störender Weise sichtbar.

Es wurde bereits eine Filterung der Bilder in der Nähe der Blockgrenzen mit einem glättenden Filter vorgeschlagen, siehe z.B. H.C. Reeve III, Jae S. Lim: "Reduction of blocking effect in image coding", in Proc. ICASSP 1983 (Boston, MA) S. 1212-1215. Ein Nachteil dieser Filterung besteht in einer sichtbaren Verunschärfung der Bilder in diesen Bereichen.

In der Druckschrift B. Ramamurthi, A. Gersho: "Nonlinear Space-Variant Postprocessing of Block Coded Images", IEEE Trans. Acoust., Speech Signal Processing, Vol. ASSP-34, S. 1258-1268, ist eine relativ komplizierte, unspezifische Nachverarbeitung der Bilder vorgeschlagen worden. Es wird keine vom Codiervorgang stammende Information, wie z.B. über die Frequenzbegrenzungen, ausgenutzt.

Der vorliegenden Erfindung liegt die Aufgabe zugrunde, ein Verfahren der eingangs genannten Art zu schaffen, das auf einfache Art und Weise wirksam eine Verbesserung der Qualität bei niedriger Datenrate übertragener Bilder durch Reduktion der Blocking-Artefakte ermöglicht.

Zur Lösung der Aufgabe wird ein Verfahren der eingangs genannten Art und gemäß dem Oberbegriff des Anspruchs 1 angegeben, das durch die im kennzeichnenden Teil des Anspruchs 1 angegebenen Merkmale charakterisiert ist.

Vorteilhafte Weiterbildungen der Erfindung sind durch die in den abhängigen Ansprüchen angegebenen Merkmale gekennzeichnet.

Erfindungsgemäß wird die Information über die beim Codiervorgang angewendeten Frequenzbegrenzungen in den Blöcken, nämlich sog. Frequenzbegrenzungs-Parameter, benutzt. In einer bevorzugten Ausführungsform der Erfindung werden in Korrekturbereichen, die die Blöcke überlappen, 1-dimensionale lineare Funktionsstücke dem Bildsignal in Zeilen- bzw. Spaltenrichtung überlagert.

Die "Höhe" der linearen Funktionsstücke ist nur abhängig von den Bildsignalen in den jeweiligen Randpixeln benachbarter Blöcke. Die "Breite" der linearen Funktionsstücke wird jeweils von den Frequenzbegrenzungs-Parametern in benachbarten Blöcken bestimmt. Im gemeinsamen Korrekturbereich zweier benachbarter Blöcke bestimmt der "schärfere" der beiden Blöcke dieser Breite.

Die Erfindung bietet insbesondere Vorteile bei einer Anwendung auf die Videoszenen-Codierung mit niedriger Datenrate, z.B. 64 kbit/s, bei der die DCT (Diskrete Cosinus-Transformation) benutzt wird. Der Bildbereich wird in nichtüberlappende Unterbereiche, "Blöcke", eingeteilt, die z.B. 16 x 16 pixel oder 8 x 8 pixel groß sind. Im Codiervorgang wird die DCT jeweils auf diese Blöcke angewendet.

Im folgenden wird die Erfindung anhand mehrerer Figuren im einzelnen beschrieben.

| | |
|---|---|
| Fig. 1a, 1b | zeigen ein Blockschaltbild eines Videosignal-Übertragungssystems mit einem senderseitigen sog. DCT/DPCM-Hybrid-Coder, durch den Frequenzbegrenzungs-Parameter je Bildblock mit dem betreffenden Videoteilsignal zusammen über den Kanal zu einem empfängerseitigen Decoder übertragen werden, in dem die Frequenzbegrenzungs-Parameter zur Steuerung der Blockfilter-Funktion im Rahmen einer Nachverarbeitung eines decodierten Videosignals dienen. |
| Fig. 2a | zeigt eine schematische Darstellung eines Bildblocks, in den ein Gebiet für die übertragenen DCT-Koeffizienten im DCT-Transformationsbereich des Bildblocks eingetragen ist. |
| Fig. 2b | zeigt eine schematische Darstellung gemäß Fig. 2a, in der ein "allgemeines" Gebiet von DCT-Koeffizienten angegeben ist. |
| Fig. 3a bis 3d | zeigen verschiedene Diagramme eines sog. 1-dimensionalen Signals im Bildbereich im Gebiet zwischen zwei benachbarten Bildblöcken. |
| Fig. 4a | bis 4c zeigen verschiedene Diagramme zur approximativen Konstruktion von Tiefpaßsignal-Anteilen von frequenzbegrenzten Signalen in einem Korrekturbereich sowie additive Überlagerun- |

EP 0 346 766 B1

gen derselben.

Fig. 5a, 5b    zeigen schematische Darstellungen einer "Blockfilterung" in Korrekturbereichen um die Bildblockgrenzen herum.

Fig. 6, 6a, 6b    zeigen ein Übersichtsflußdiagramm bzw. Teilflußdiagramme zur Erläuterung des erfindungsgemäßen Verfahrens.

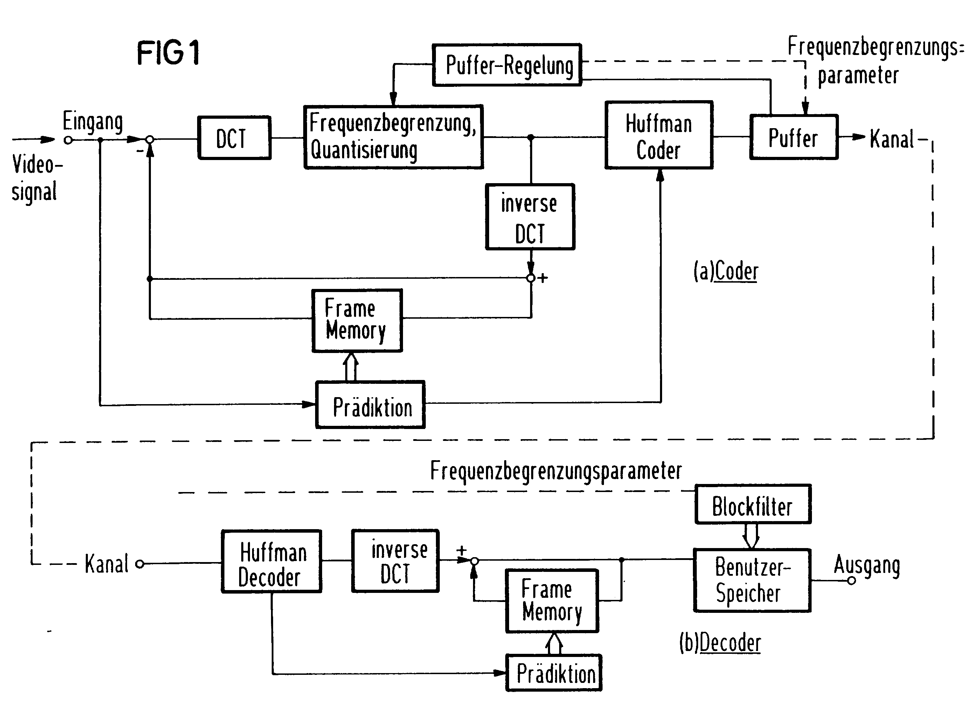

Wie bereits erläutert, ist ein allgemeines Schaltbild eines DCT/DPCM-Hybridcoders in Fig. 1a, 1b gezeigt. In der Fig. ist ein mögliches Schema dargestellt, wie das Verfahren, im weiteren "Blockfilterung" genannt, in einem solchen Coder angewendet werden kann. Vom Coder werden den einzelnen Blöcken zugeordnete "Frequenzbegrenzungs-Parameter" an den Decoder gesendet. Beim Decoder dienen diese Parameter zur Steuerung der "Blockfilterung" am Decoderausgang, d.h. nach der DPCM-Schleife. In diesem Beispiel wird das Verfahren also als Nachverarbeitung der decodierten Bilder angewendet.

Eine andere Möglichkeit besteht beispielsweise darin, die "Blockfilterung" bei Coder und Decoder jeweils innerhalb der DPCM-Schleife anzuwenden. Auch hier wird das Verfahren von Frequenzbegrenzungs-Parametern gesteuert, die ebenfalls vom Coder zum Decoder übertragen werden müssen. Bei diesem zweiten Anwendungstyp werden eventuell zusätzlich Parameter übertragen, welche die Information beinhalten, ob in den Korrekturbereichen bei den einzelnen Blöcken die "Blockfilterung" überhaupt angewendet wird oder nicht.

Bei der Szenencodierung mit DCT-Transformation ist jedes Bild in eine Vielzahl von aneinandergrenzendern quadratischen Blockbereichen fester Größe, z.B. 8 x 8 oder 16 x 16 pixel, eingeteilt. Die in der Verarbeitung der Bilder vorkommenden DCT-s und inversen DCT-s werden auf jeden Block jeweils für sich angewendet.

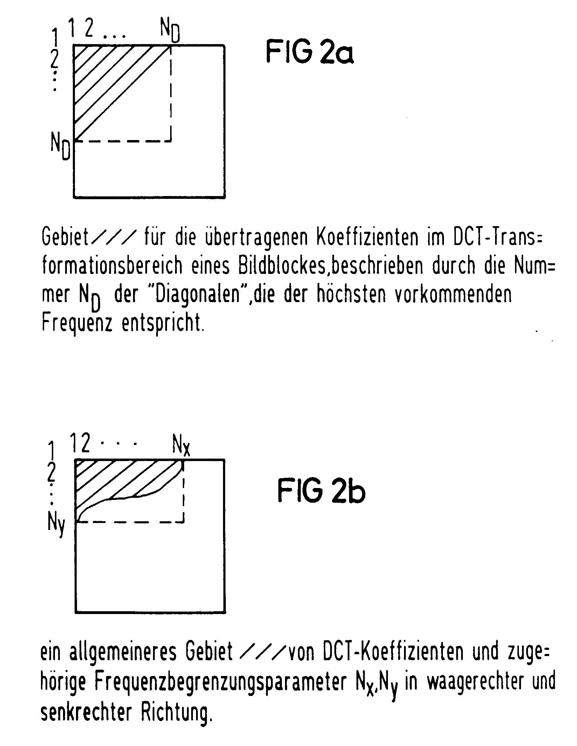

Um in Niedrig-Rate-Codern die zu übertragende Bitrate begrenzt zu halten, ist es eine typische Vorgehensweise, die Zahl der zu übertragenden Koeffizienten im DCT-Transformationsbereich eines Blockes zu beschränken, d.h. eine i.a. vom Blockinhalt abhängige Frequenzbegrenzung vorzunehmen. In Fig. 2a ist ein Gebiet für die übertragenen Koeffizienten im DCT-Transformationsbereich eines Bildblocks gezeigt, das durch die Nummer $N_D$ der "Diagonalen" entsprechend der höchsten übertragenen Frequenz charakterisiert ist. In Fig. 2b ist ein allgemeines Gebiet dargestellt. In beiden Fällen können zugehörige Frequenzbegrenzungs-Parameter, d.h. Koeffizientennummern, $N_x$, N entsprechend den höchsten vorkommenden Frequenzen in waagerechter und senkrechter Richtung angegeben werden. Im ersten Fall ist $N_x=N_y=N_D$.

Es wird nun die Annahme getroffen, daß diese Frequenzbegrenzung in Bildblöcken die Ursache für mögliche sichtbare "Blocking"-Artefakte, d.h. das Sichtbarwerden von Blockgrenzen, ist. Für die Entstehungsursache ist nicht wichtig, daß in benachbarten Bildblöcken die Frequenzbeschränkung eventuell verschieden ist, sondern nur die Tatsache der Frequenzbeschränkung überhaupt. Die Stärke des störenden Effekts ist allerdings von dem Grad der Frequenzbegrenzung abhängig und wird auch im "Blockfilter"-Verfahren berücksichtigt.

Es wird weiterhin angenommen, daß für die Situation der "Blocking"-Effekte die Frequenzbegrenzung ausreichend durch die zwei separierten Begrenzungen in waagerechter und senkrechter Richtung beschrieben wird, was in den Fig. 2a, 2b durch die gestrichelten rechteckigen Begrenzungen angedeutet ist. Dementsprechend ist auch die "Blockfilter"-Operation im Bildbereich separiert in zwei hintereinander auszuführende Operationen, die nur innerhalb der Bildzeilen, d.h. waagerecht, bzw. nur innerhalb der Bildspalten, d.h. senkrecht, ausgeführt werden.

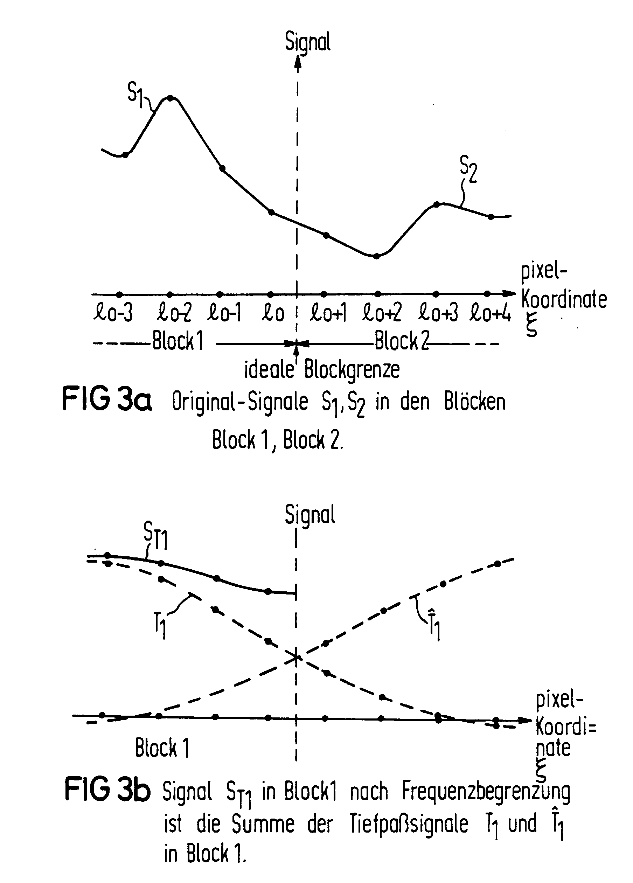

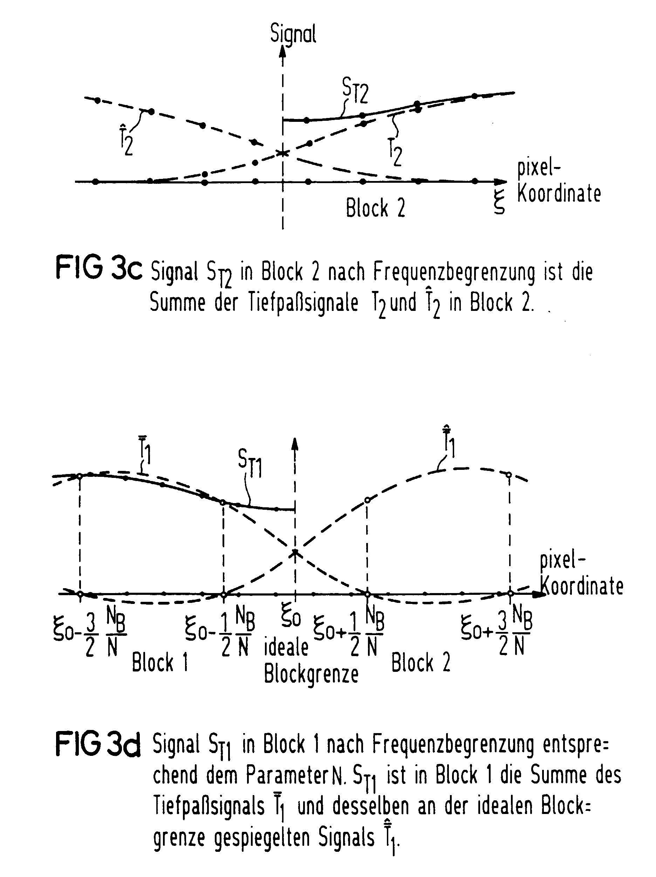

Die Wirkung, die eine Frequenzbegrenzung in waagerechter oder senkrechter Richtung im DCT-Transformationsbereich im Bildbereich für das 1-dimensionale Signal innerhalb einer Bildzeile oder Bildspalte hat, ist in Fig. 3 dargestellt. In den verschiedenen Abbildungen ist an der Abszisse eine pixel-Koordinate $\xi$ aufgetragen. Der Abstand zwischen zwei pixeln soll = 1 sein. Die Signale sind primär durch Werte im diskreten pixel-Raster repräsentiert.

In Fig. 3a sind die Original-Signale $S_1$, $S_2$ im Bereich zweier benachbarter Blöcke Block 1, Block 2 dargestellt. Jedes der beiden Signale soll formal auf den zugehörigen Blockbereich beschränkt sein:

$$S_1(\xi) = 0 \quad \text{für } \xi \text{ außerhalb Block 1,}$$
$$S_2(\xi) = 0 \quad \text{für } \xi \text{ außerhalb Block 2,} \tag{1}$$

so daß das gesamte Originalsignal $(S(\xi)$ im Bereich der beiden Blöcke als die Summe

$$S(\xi) = S_1(\xi) + S_2(\xi) \tag{2}$$

3

geschrieben werden kann. Als ideale Blockgrenze zwischen Block 1 und Block 2 sei die Mitte zwischen den beiden letzten noch jeweils zu einem Block gehörenden pixel-Rasterpunkten bezeichnet.

Es kann gezeigt werden, daß eine Frequenzbegrenzung im DCT-Bereich für <u>einen</u> Block eine <u>nichthomogene</u> Operation im Bildbereich bedeutet. Diese Operation kann formal zerlegt werden in die folgenden Teiloperationen: Das Signal wird

1. an den idealen Blockgrenzen <u>gespiegelt,</u>
2. periodisch fortgesetzt mit der Periode = 2 $N_B$, $N_B$ = Blockbreite (also z.B. 8 oder 16),
3. <u>homogen</u> gefaltet mit einer Tiefpaß-Filterfunktion     (3)
$F(\frac{N}{N_B} \xi)$, N: Frequenzbegrenzungsparameter,
4. zum Schluß auf den ursprünglichen Blockbereich eingeschränkt, d.h. außerhalb dessen = 0 gesetzt.

Alle vier Teiloperationen sind linear im Sinne der Superposition. Als wesentlich für den "Blocking"-Effekt wird angesehen, daß das Signal im betrachteten Gebiet zuerst an der idealen Blockgrenze zwischen Block 1 und Block 2 <u>gespiegelt</u> und danach <u>homogen</u> tiefpaßgefiltert wird. $S_{T1}(\xi)$ bzw. $S_{T2}(\xi)$ sind die resultierenden Signale in Block 1 bzw. Block 2. Jedes der beiden resultierenden Signale kann dann innerhalb des zugehörigen Blocks als Summe einer tiefpaßgefilterten Funktion und derselben, an der idealen Blockgrenze gespiegelten Funktion geschrieben werden:

$$S_{T1} = T_1 + T_1 \text{ , beschränkt auf Block 1, s. Fig. 3b,}$$

$$S_{T2} = T_2 + T_2, \text{ beschränkt auf Block 2, s. Fig. 3c.} \qquad (4)$$

Eine homogene Operation, bei der keine "Blocking"-Effekte sichtbar würden, läge z.B. vor, wenn in beiden Blöcken dieselbe Frequenzbegrenzung angewendet würde und das resultierende Signal = $T_1 + T_2$ wäre, wobei jeweils $T_1$ und $T_2$ nicht auf den zugehörigen Block eingeschränkt wären.

Bei den betrachteten DCT-Codern wird i.a. eine Frequenzbegrenzung in den Bildblöcken ausgeführt, so daß die Frequenzbegrenzungen in benachbarten Blöcken nicht notwendigerweise gleich sind. Es seien die Frequenzbegrenzungs-Parameter $N_1$ für Block 1 und $N_2$ für Block 2 und

$$N = \text{Max } (N_1, N_2) \qquad (5)$$

der größere der beiden Parameter. Würde nachträglich auf die beiden resultierenden Signale $S_{T1}$ in Block 1 und $S_{T2}$ in Block 2 noch einmal eine Frequenzbegrenzungsoperation -ausgedrückt durch die obigen vier Teiloperationen (3)- angewendet werden, jedoch nun für beide Blöcke mit denselben Frequenzbegrenzungs-Parametern N, dann würden sich, wie leicht einzusehen ist, wieder dieselben resultierenden Signale $S_{T1}$ in Block 1 und $S_{T2}$ in Block 2 ergeben.

Eine weitere Operation, die ebenfalls die beiden resultierenden Signale $S_{T1}$ und $S_{T2}$ nicht verändert und gleichzeitig wieder eine Zerlegung jedes der beiden Signale in ein homogen tiefpaßgefilteres Signal und ein dazu an der idealen Blockgrenze gespiegeltes liefert, kann wie folgt definiert werden:

Jedes der beiden Signale $S_{T1}$, $S_{T2}$ kann als kontinuierliche Funktion gedacht werden, wobei die interpolierten Werte durch die kontinuierliche Tiefpaß-Filterfunktion $F(\frac{N}{N_B} \cdot \xi)$ in Teiloperation "3." von (3) erzeugt sind.

Diese kontinuierlichen Signale werden abgetastet in einem Raster, das der Frequenzbegrenzung angepaßt ist: Die Rasterpunkte bei $...,\xi_0 - \frac{3}{2} \frac{N_B}{N}, \xi_0 - \frac{1}{2} \frac{N_B}{N}, \xi_0 + \frac{1}{2} \frac{N_B}{N}, \xi_0 + \frac{3}{2} \frac{N_B}{N}, ...$, liegen symmetrisch zur iedealen Blockgrenze bei $\xi = \xi_0$, wie in (6) Fig. 3d durch ooo angedeutet. Der Abstand ist $\frac{N_B}{N}$.

In Fig. 3d ist die Situation für das Signal $S_{T1}$ dargestellt. Die Abtastung von $S_{T2}$ soll im selben Raster erfolgen.

Wenn bei diesen derart abgetasteten Signalfunktionen wieder die obigen vier Teiloperationen (3) ausgeführt werden, wobei Teiloperation "3." wieder interpolierend sei, dann ergeben sich wiederum die beiden resultierenden Signale $S_{T1}$, $S_{T2}$. Dies kann leicht mit Hilfe des bekannten "Abtast-Theorems" gezeigt werden.

Bei dieser Operation ergibt sich ebenfalls eine additive Zerlegung für jedes der resultierenden Signale jeweils in ein tiefpaßgefiltertes Signal und dasselbe an der idealen Blockgrenze gespiegelte Signal:

$$S_{T1} = \overline{T}_1 + \hat{\underline{T}}_1 \quad \text{, beschränkt auf Block 1, s. Fig. 3d,}$$
$$S_{T2} = \overline{T}_2 + \hat{\underline{T}}_2 \quad \text{, beschränkt auf Block 2.} \qquad (7)$$

In diesem Fall verläuft das tiefpaßgefilterte Signal $\bar{T}_1$ bzw. $\bar{T}_2$ an den Stützstellen des in (6) beschriebenen Abtastrasters innerhalb des jeweils zugehörigen Blocks durch die entsprechenden Abtastwerte von $S_{T1}$ bzw. $S_{T2}$ und außerhalb des zugehörigen Blocks durch Stützwerte $= 0$.

"Blockfilter"-Verfahren

Wie zuvor allgemein erläutert, bestehen die Bildsignale, nachdem sie im DCT-Transformationsbereich frequenzbegrenzt wurden, je Bildblock aus einem Tiefpaßsignal und jeweils einem zugehörigen an einer Blockgrenze gespiegelten Tiefpaßsignal, die beide jeweils auf den Bildblock beschränkt sind.

Der Erfindungsgedanke besteht darin, aus den in jedem Bildblock vorliegenden frequenzbegrenzten Signalen jeweils in Korrekturbereichen, die blockübergreifend sind, näherungsweise allein die Tiefpaßsignal-Anteile ohne die gespiegelten TiefpaßsignalAnteile zu konstruieren und additiv zu überlagern.

Entsprechend den zuvor gegebenen Erläuterungen soll dabei die "Blockfilterung" unterteilt sein in Teiloperationen, die jeweils 1-dimensional innerhalb der Bildzeilen bzw. innerhalb der Bildspalten ausgeführt werden.

Bei einer bevorzugten Ausführungsform des Verfahrens wird zur Steuerung der "Blockfilterung" im Korrekturbereich zweier benachbarter Bildblöcke als gemeinsamer Frequenzbegrenzungs-parameter N der größere der jedem einzelnen Block zugeordneten Frequenzbegrenzungsparameter genommen, s. (5).

Bei der bevorzugten Ausführungsform werden bei einer 1-dimensionalen Teiloperation in einem Korrekturbereich innerhalb einer Bildzeile oder Bildspalte jeweils solche Tiefpaßsignal-Anteile approximativ konstruiert und überlagert, die durch Abtastpunkte des vorliegenden, entsprechend den zuvor gegebenen Ausführungen kontinuierlich gedachten Bildsignals verlaufen, und zwar in einem Abtastraster, das bei (6) beschrieben ist.

Bei der bevorzugten Ausführungsform erfolgt jeweils eine 1-dimensionale Teiloperation in einem Korrekturbereich innerhalb einer Bildzeile oder Bildspalte durch additives Überlagern der vorhandenen Bildsignale mit linearen Funktionsstücken.

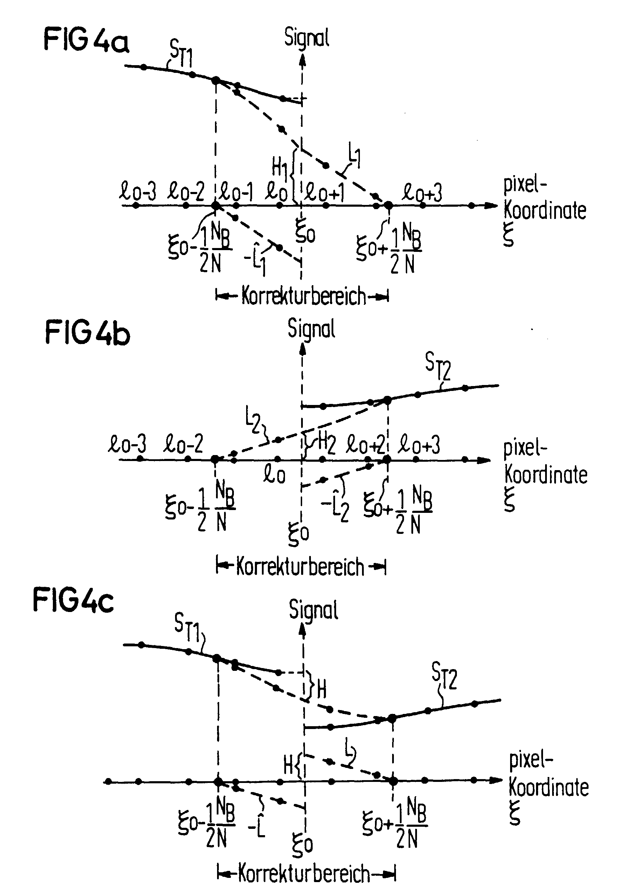

Eine weitere Beschreibung und Erläuterung der bevorzugten Ausführungsform wird im folgenden gegeben, vgl. Fig. 4:

Es seien wiederum wie in Abschnitt 2 $S_{T1}(\xi)$ und $S_{T2}(\xi)$ die 1-dimensionalen, in einer Bildzeile oder Bildspalte vorliegenden frequenzbegrenzten Signale in zugehörigen Bildblöcken Block 1 und Block 2. Aus $S_{T1}$ und $S_{T2}$ sollen in einem Korrekturbereich K approximativ die Tiefpaßsignale $\bar{T}_1$ und $\bar{T}_2$ konstruiert und überlagert werden, vgl. (6), (7), Fig. 3d.

Als Korrekturbereich K(N) wird der Bereich zwischen den der idealen Blockgrenze bei $\xi = \xi_0$ auf beiden Seiten nächstliegenden Abtastpunkten des gedachten Abtastrasters, wie es in (6) definiert ist, genommen, also das Intervall

$$K(N) = (\xi_0 - \frac{1}{2}\frac{N_B}{N}, \; \xi_0 + \frac{1}{2}\frac{N_B}{N}), \; N_B = \text{Blockbreite, s. (3)} \tag{8}$$

Die Konstruktion eines Tiefpaßsignal-Anteils -Anteils wird am Beispiel von $\bar{T}_1$ gegeben und ist sinngemäß auf $\bar{T}_2$ zu übertragen. $\bar{T}_1$ wird in dem Teil des Korrekturbereichs, der außerhalb von Block 1 liegt, durch ein lineares Funktionsstück $L_1$ angenähert:

$$L_1(\xi) = \begin{cases} H_1 - 2H_1\frac{N}{N_B}, & \text{für } \xi \in (\xi_0, \xi_0 + \frac{1}{2}\frac{N_B}{N}) \\ 0 & \text{sonst} \end{cases} \tag{9'}$$

mit $H_1 = \frac{1}{2} S_{T1}(\ell_0)$, vgl. Fig. 4a.

Die Wahl von $H_1$ kann wie folgt begründet werden:

$S_{T1}$ ist nach (7) die Summe der zueinander an $\xi = \xi_0$ gespiegelten Signalanteile $\bar{T}_1$ und $\hat{\bar{T}}_1$. Deshalb ist $\bar{T}_1(\xi_0) = \frac{1}{2} S_{T1}(\xi_0)$. Aus dem gleichen Grund hat $S_{T1}$ in $\xi = \xi_0$ eine horizontale Tangente. Deshalb ist $S_{T1}(\ell_0)$, d.h. der Wert von $S_{T1}$ im der idealen Blockgrenze nächstliegenden pixel-Stützpunkt, eine gute Näherung für $S_{T1}(\xi_0)$.

In dem Teil des Korrekturbereichs, der innerhalb Block 1 liegt, ist das zu $L_1$ an $\xi = \xi_0$ gespiegelte lineare Funktionsstück $\hat{L}_1$ eine entsprechende Approximation für $\hat{\bar{T}}_1$. Um also in diesem Bereich eine Approximation von $\bar{T}_1$ zu erhalten, ist dort wegen (7) $\hat{L}_1$ von $T_{T1}$ zu subtrahieren. Insgesamt ist das im ganzen Korrekturbereich aus $S_{T1}$ konstruierte, $\bar{T}_1$ approximierende Signal $\bar{S}_{T1}$:

$$\bar{S}_{T1}(\xi) = S_{T1}(\xi) - \hat{L}_1(\xi) + L(\xi), \tag{9}$$

ξε Korrekturbereich, vgl. Fig. 4a.

Eine ganz entsprechende Konstruktion wird bei $S_{T2}$ angewendet und ergibt

$$\overline{S}_{T2}(\xi) = S_{T2}(\xi) - \hat{L}_2(\xi) + L(\xi), \tag{10}$$

ξε Korrekturbereich, vgl. Fig. 4b, mit

$$\hat{L}_2(\xi) = \begin{cases} H_2 - 2H_2 \frac{N}{N_B}(\xi - \xi_0), & \text{für } \xi \in (\xi_0, \xi_0 + \frac{1}{2}\frac{N_B}{N}), \\ 0 & \text{sonst} \end{cases} \tag{10'}$$

$$H_2 = \frac{1}{2} S_{T2}(l_0 + 1).$$

$L_2(\xi)$ ist das zu $\hat{L}_2(\xi)$ an $\xi = \xi_0$ gespiegelte lineare Funktionsstück.

Die additive Überlagerung der beiden konstruierten Signale $\overline{S}_{T1}$ und $\overline{S}_{T2}$ im gesamten Korrekturbereich, also das Resultat $\overline{S}_T$ der "Blockfilter"-Teiloperation ist damit:

$$\overline{S}_T(\xi) = \overline{S}_{T1}(\xi) + \overline{S}_{T2}(\xi)$$

$$= S_T(\xi) + L(\xi) - \hat{L}(\xi), \text{ vgl. Fig. 4c}, \tag{11}$$

ξε Korrekturbereich K(N),
mit

$$S_T(\xi) = S_{T1}(\xi) + S_{T2}(\xi): \text{ vor der "Blockfilter"-Teiloperation vorliegendes Bildsignal.}$$

$$L(\xi) = L_1(\xi) - \hat{L}_2(\xi) = \begin{cases} H - 2H \frac{N}{N_B}(\xi - \xi_0), & \text{für } \xi \in (\xi_0, \xi_0 + \frac{1}{2}\frac{N_B}{N}), \\ 0 & \text{sonst} \end{cases} \tag{11'}$$

$$H = H_1 - H_2 = \frac{1}{2}\left[S_T(l_0) - S_T(l_0 + 1)\right]$$

$\hat{L}(\xi)$ ist das zu $L(\xi)$ an $\xi = \xi_0$ gespiegelte lineare Funktionsstück.

Die "Blockfilter"-Teiloperation wird also durch Überlagerung des vorher vorliegenden Bildsignals $S_T$ mit linearen Funktionsstücken L und -$\hat{L}$ ausgeführt, deren Höhe H die Hälfte allein der Differenz der pixel-Stützwerte von $S_T$ ist, die der idealen Blockgrenze unmittelbar benachbart sind.

Numerische Berechnung der linearen Funktionsstücke

Für die praktische Anwendung muß das in (11') definierte lineare Funktionsstück L in den pixel-Stützpunkten berechnet werden, die im Korrekturbereich liegen. Die Berechnung kann über einen Stützwert $H_0$ und ein Inkrement $\Delta$ iterativ erfolgen, mit einem Laufindex m, der von 1 bis $m_G$ läuft:

$$L(l_0 + m) = \begin{cases} H_0 - m\Delta, & \text{für } m = 1, \cdots, m_G, \text{ falls } m_G \geq 1 \\ 0 & \text{sonst} \end{cases} \tag{12}$$

mit

$$\Delta = [S_T(\ell_0) - S_T(\ell_0 + 1)] \frac{N}{N_B} \qquad (12')$$

$$H_0 = \frac{1}{2} [S_T(\ell_0) - S_T(\ell_0 + 1) + \Delta] \qquad (12'')$$

$$m_G = \text{int} [\frac{1}{2} (1 + \frac{N_B}{N}] \qquad (12''')$$

Da i.a. $N_B$ eine 2-er Potenz ist, z.B. $N_B = 8$ oder $= 16$, ist die Division durch $N_B$ in (12') eine einfache Bit-Schiebe-Operation. Die Division durch N kann z.B., da N auch nur die relativ wenigen Werte 1, ..., $N_B$ annimmt, über eine Tabelle als eine Multiplikationj ausgedrückt werden.

Ablaufplan der "Blockfilterung" bei der bevorzugten Ausführungsform

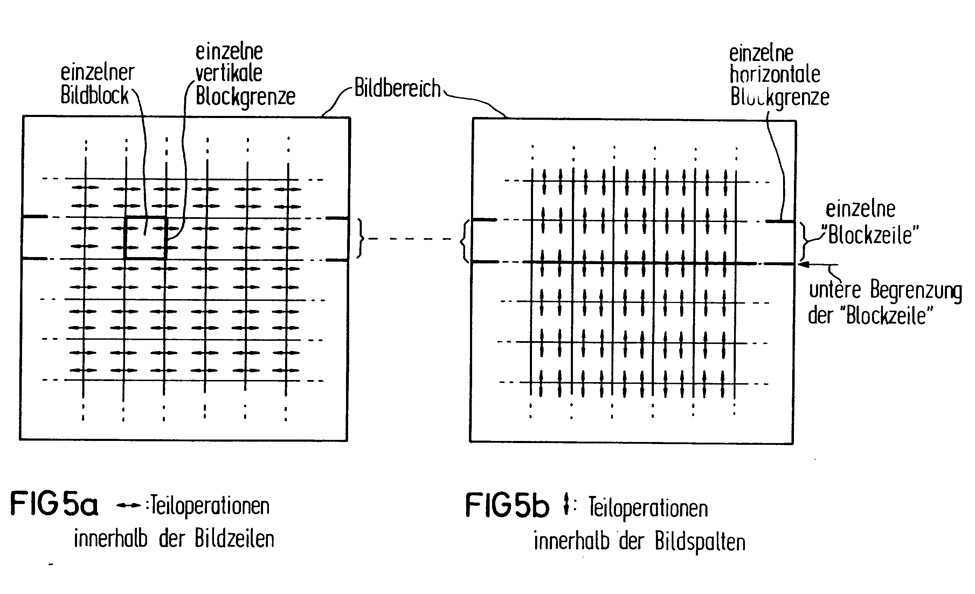

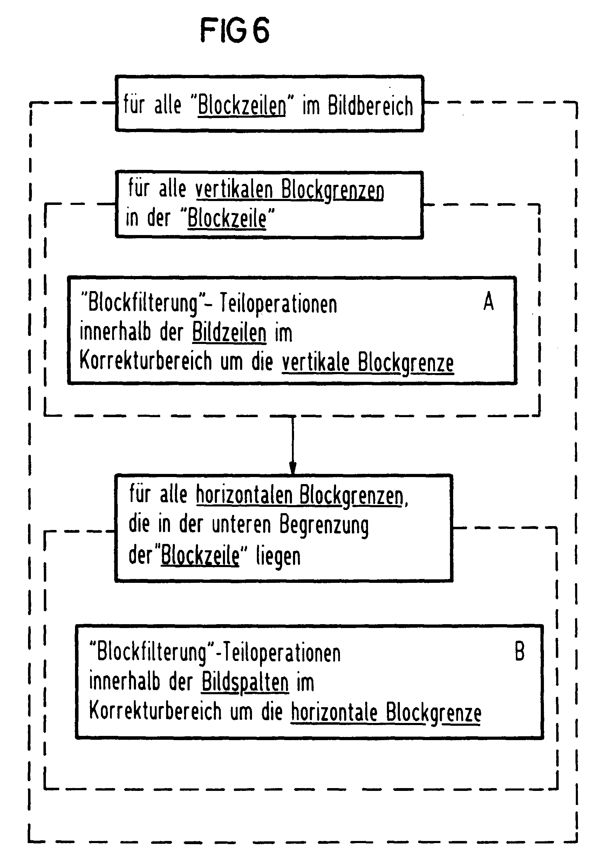

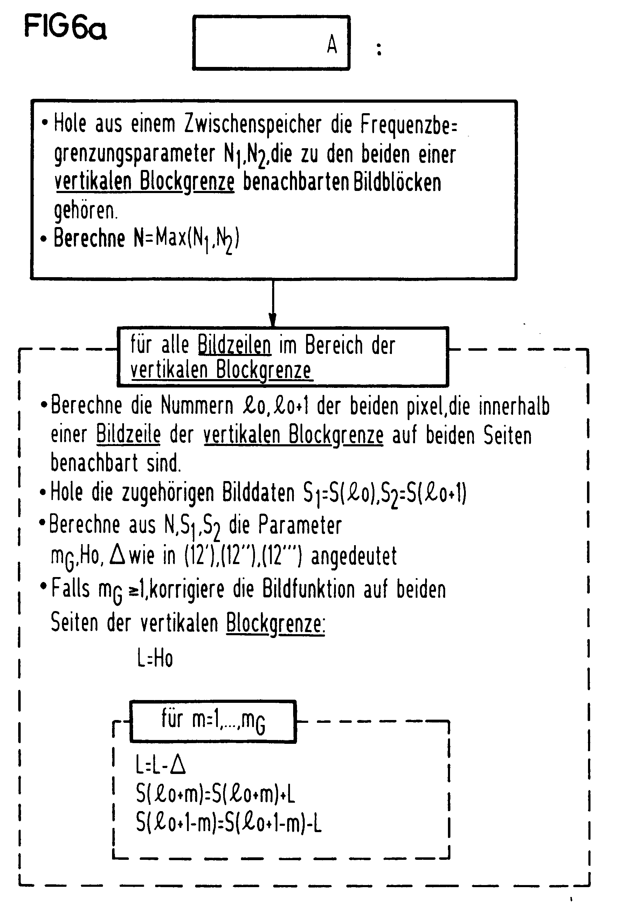

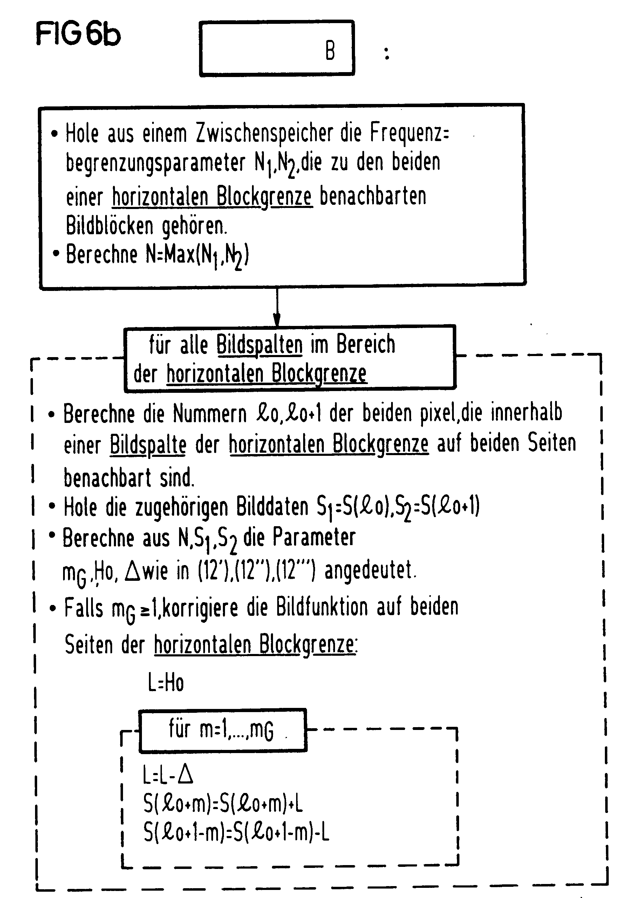

In dem Flußdiagramm gemäß Fig. 6 wird Bezug genommen auf Fig. 5. In Fig. 5 ist eine Unterteilung des Bildbereichs in Unterbereiche dargestellt, die in Teiloperationen der "Blockfilterung" jeweils bearbeitet werden. Als eine "Blockzeile" wird, wie in Fig. 5 angedeutet, eine Reihe von Bildblöcken bezeichnet, die in Bildzeilenrichtung aneinandergrenzen.

Die Ergebnisse von Teiloperationen werden immer in denselben Speicher zurückgeschrieben. Die Ausgangsbilddaten und die Bilddaten von Zwischenergebnissen werden im Ablaufplan sämtlich unabhängig vom Stand der Bearbeitung mit S (pixel-Nummer) bezeichnet.

Bei der bevorzugten Ausführungsform reicht ein Korrekturbereich bei einer Teiloperation niemals über die Mitte eines Bildblocks hinaus. Daher ist dem Ablaufplan zu entnehmen, daß eine Parallelisierung von Teiloperationen, die sich gegenseitig nicht stören, möglich ist. Das sind die Teiloperationen jeweils an den vertikalen Blockgrenzen in einer "Blockzeile", s. Fig. 5a, und die Teiloperationen an den horizontalen Blockgrenzen, die innerhalb der unteren Begrenzung einer "Blockzeile" liegen, s. Fig. 5b.

**Patentansprüche**

1. Verfahren zur Reduktion von Blocking-Artefakten in Bilddaten, die mit Hilfe einer blockweisen DCT-Transformation unter Frequenzbegrenzung, bei der Transformationskoeffizienten mit großen Ortsfrequenzen vernachlässigt werden, codiert und später wieder decodiert wurden, wobei Frequenzbegrenzungs-Parameter, die von der Frequenzbegrenzung abhängig sind, erzeugt und übertragen werden, dadurch gekennzeichnet, daß den Bilddaten in einer Umgebung einer Blockgrenze 1-dimensionale Funktionsstücke, deren Verlauf von den Werten bestimmter Parameter, die mindestens von den Frequenzbegrenzungs-Parametern der Codierung/Decodierung abhängig sind, abhängt, additiv überlagert werden, deren Parameterwerte so gewählt sind, daß diese Bilddaten sich nach der Überlagerung durch die Funktionsstücke an den Blockgrenzen im wesentlichen stetig aneinander anschließen.

2. Verfahren nach Anspruch 1, bei dem diese Funktionsstücke als Funktionen der Bildpunktkoordinaten in jeweils einer Richtung der Bildebene konstant sind und in der jeweils anderen Richtung der Bildebene innerhalb der Umgebung der Blockgrenze linear veränderlich sind und außerhalb dieser Umgebung den Wert Null annehmen.

3. Verfahren nach einem der vorhergehenden Ansprüche, welches nur auf ausgewählte Blockgrenzen angewendet wird.

**Claims**

1. Method for the reduction of blocking artifacts in video data which, with the aid of a block-by-block DCT transform with frequency limiting in which transform coefficients having large spacial frequencies are ignored, have been encoded and subsequently decoded again, frequency limiting parameters which are dependent on the frequency limiting being generated and transmitted, characterized in that the video data have additively superposed on them, in surroundings of a block boundary, 1-dimensional function elements whose profile depends on the values of specific parameters, which are dependent at least on the frequency limiting parameters of the encoding/decoding, whose parameter values are selected such that these video data essentially continuously adjoin one another after superposition by the function elements at the block boundaries.

2. Method according to Claim 1, in which these function elements are constant as functions of the pixel co-ordinates in one respective direction of the image plane and are linearly variable in the respective other direction of the image plane within the surroundings of the block boundary and assume the value zero outside these surroundings.

3. Method according to one of the preceding claims, which is applied only to selected block boundaries.

## Revendications

1. Procédé pour la réduction d'artefacts d'encombrement dans des données d'image qui à l'aide d'une transformation DCT par bloc avec limitation de fréquence, dans laquelle les coefficients de transformation de grandes fréquences locales sont négligées, ont été codées et plus tard à nouveau décodées, des paramètres de limitation de fréquence dépendant de la limitation de fréquence étant générés et transmis, caractérisé en ce qu'aux données d'image, dans le voisinage d'une frontière entre deux blocs, sont superposées par addition des éléments de fonction à une dimension, dont la variation dépend des valeurs de certains paramètres, lesquels dépendent au moins des paramètres de limitation de fréquence du codage/décodage, paramètres dont les valeurs sont choisies de telle sorte que ces données d'image, après la superposition par les éléments de fonction, soient contiguës aux frontières entre deux blocs, de manière essentiellement continue.

2. Procédé selon la revendication 1, dans lequel ces éléments de fonction en tant que fonctions des coordonnées des pixels sont constants dans à chaque fois un sens du plan d'image et linéairement variables dans à chaque fois l'autre sens du plan d'image à l'intérieur du voisinage de la frontière entre deux blocs, et prennent la valeur zéro à l'extérieur de ce voisinage.

3. Procédé selon l'une quelconque des revendications précédentes, lequel est appliqué uniquement à des frontières sélectionnées entre deux blocs.

FIG 1

(a) Coder

(b) Decoder

Frequenzbegrenzungsparameter

EP 0 346 766 B1

## FIG 2a

Gebiet /// für die übertragenen Koeffizienten im DCT-Trans=
formationsbereich eines Bildblockes,beschrieben durch die Num=
mer $N_D$ der "Diagonalen",die der höchsten vorkommenden
Frequenz entspricht.

## FIG 2b

ein allgemeineres Gebiet ///von DCT-Koeffizienten und zuge=
hörige Frequenzbegrenzungsparameter $N_x$,$N_y$ in waagerechter und
senkrechter Richtung.

FIG 3a  Original-Signale $S_1, S_2$ in den Blöcken Block 1, Block 2.

FIG 3b  Signal $S_{T1}$ in Block1 nach Frequenzbegrenzung ist die Summe der Tiefpaßsignale $T_1$ und $\hat{T}_1$ in Block 1.

**FIG 3c** Signal $S_{T2}$ in Block 2 nach Frequenzbegrenzung ist die Summe der Tiefpaßsignale $T_2$ und $\hat{T}_2$ in Block 2.

**FIG 3d** Signal $S_{T1}$ in Block 1 nach Frequenzbegrenzung entspre= chend dem Parameter N. $S_{T1}$ ist in Block 1 die Summe des Tiefpaßsignals $\bar{T}_1$ und desselben an der idealen Block= grenze gespiegelten Signals $\hat{\bar{T}}_1$.

## FIG 4a

## FIG 4b

## FIG4c

FIG5a ⟶: Teiloperationen innerhalb der Bildzeilen

FIG5b ↕: Teiloperationen innerhalb der Bildspalten

# FIG 6

für alle "Blockzeilen" im Bildbereich

für alle vertikalen Blockgrenzen
in der "Blockzeile"

"Blockfilterung"– Teiloperationen
innerhalb der Bildzeilen im
Korrekturbereich um die vertikale Blockgrenze      A

für alle horizontalen Blockgrenzen,
die in der unteren Begrenzung
der"Blockzeile" liegen

"Blockfilterung"-Teiloperationen      B
innerhalb der Bildspalten im
Korrekturbereich um die horizontale Blockgrenze

## FIG6a

$$A \quad :$$

- Hole aus einem Zwischenspeicher die Frequenzbe= grenzungsparameter $N_1, N_2$ die zu den beiden einer <u>vertikalen Blockgrenze</u> benachbarten Bildblöcken gehören.
- Berechne $N = \text{Max}(N_1, N_2)$

für alle <u>Bildzeilen</u> im Bereich der <u>vertikalen Blockgrenze</u>

- Berechne die Nummern $\ell_0, \ell_0+1$ der beiden pixel, die innerhalb einer <u>Bildzeile</u> der <u>vertikalen Blockgrenze</u> auf beiden Seiten benachbart sind.
- Hole die zugehörigen Bilddaten $S_1 = S(\ell_0), S_2 = S(\ell_0+1)$
- Berechne aus $N, S_1, S_2$ die Parameter $m_G, H_0, \Delta$ wie in $(12'), (12''), (12''')$ angedeutet
- Falls $m_G \geq 1$, korrigiere die Bildfunktion auf beiden Seiten der vertikalen <u>Blockgrenze</u>:

$$L = H_0$$

für $m = 1, \dots, m_G$

$L = L - \Delta$
$S(\ell_0+m) = S(\ell_0+m) + L$
$S(\ell_0+1-m) = S(\ell_0+1-m) - L$

## FIG 6b

$$\boxed{\qquad B \qquad} \quad :$$

> • Hole aus einem Zwischenspeicher die Frequenz=
> begrenzungsparameter $N_1, N_2$, die zu den beiden
> einer <u>horizontalen Blockgrenze</u> benachbarten
> Bildblöcken gehören.
> • Berechne $N = Max(N_1, N_2)$

$$\boxed{\begin{array}{c}\text{für alle } \underline{\text{Bildspalten}} \text{ im Bereich} \\ \text{der } \underline{\text{horizontalen Blockgrenze}}\end{array}}$$

• Berechne die Nummern $\ell o, \ell o+1$ der beiden pixel, die innerhalb
  einer <u>Bildspalte</u> der <u>horizontalen Blockgrenze</u> auf beiden Seiten
  benachbart sind.
• Hole die zugehörigen Bilddaten $S_1 = S(\ell o), S_2 = S(\ell o+1)$
• Berechne aus $N, S_1, S_2$ die Parameter
  $m_G$, Ho, $\triangle$ wie in (12'),(12''),(12''') angedeutet.
• Falls $m_G \geq 1$, korrigiere die Bildfunktion auf beiden
  Seiten der <u>horizontalen Blockgrenze</u>:

$$L = Ho$$

$$\boxed{\text{für } m=1,...,mG}$$

$$L = L - \triangle$$
$$S(\ell o+m) = S(\ell o+m) + L$$
$$S(\ell o+1-m) = S(\ell o+1-m) - L$$